# EUROPEAN PATENT SPECIFICATION

(11) **EP 1 506 688 B1**
(45) Date of publication and mention of the grant of the patent: **02.05.2007**
(21) Application number: 03749961.3
(22) Date of filing: 11.04.2003
(51) Int. Cl.: H04Q 7/38, H04Q 7/22

(54) **WIRELESS COMMUNICATIONS ARRANGEMENTS WITH LOCATION BASED SERVICES**
DRAHTLOSE KOMMUNIKATIONSANORDNUNGEN MIT ORTSBASIERTEN DIENSTEN
DISPOSITIFS DE COMMUNICATIONS RADIO AVEC SERVICES BASES SUR LA LOCALISATION

(30) Priority: 07.05.2002 EP 02076828
(43) Date of publication of application: 16.02.2005
(73) Proprietor: Koninklijke Philips Electronics N.V., 5621 BA Eindhoven (NL)
(72) Inventor: MELPIGNANO, Diego, NL-5656 AA Eindhoven (NL); GENNARI, Fabrizio, NL-5656 AA Eindhoven (NL); SIORPAES, David, NL-5656 AA Eindhoven (NL)
(74) Representative: van der Veer, Johannis Leendert
(86) International application number: PCT/IB2003/001536
(87) International publication number: WO 2003/096735

(56) References cited:
- EP-A- 0 800 320
- WO-A-02/089442
- US-A1- 2001 044 310
- LEE MAN KEI ET AL: "An efficient RPC scheme in mobile CORBA environment" PARALLEL PROCESSING 2000, 21 August 2000 (2000-08-21), pages 575-582, XP010511991

## Description

The present invention relates to wireless communications arrangements and in particular to wireless communications arrangements in which location based services are provided to a mobile terminal. The invention also relates to wireless communications units, methods and software used in such arrangements.

Wireless LANs are becoming popular nowadays, not only in indoor environments but also in outdoor spaces. By means of wireless access points, mobile terminals can use networking services similar to those available in a wired LAN.

When a mobile device roams from one access point to another, in some cases it is useful to deliver position-specific content to the user. Many interesting applications are based on location dependent information retrieval and a mobile user can access information that is tightly coupled with its position, even if such information is centralized at the server's side. For example, the content of a Web page could change according to the access point the user is connected to. The Web server, therefore, must be able to detect the mobile terminal's location and be able to change the content delivered according to it.

Once a mobile terminal reaches an access point, IP communication between mobile users and an associated server may be possible, along with the subsequent desire for the provision of location based services (LBS). Context aware information delivering often requires mobile user localization; i.e. the server needs to customize services based on user's context: examples are user or position-specific or related web page contents.

In US 6,101,387 a system is proposed for providing network originated notification of location based services to mobile stations. In this proposal, however, it is necessary to provide means for recording subscriber information and this takes the form of a visiting location register (VLR). This register includes a database containing temporary identification and subscriber information about all known mobile stations currently located in the area of coverage of an associated mobile switching center (access point). The VLR may comprise a stand-alone unit or may be integrated into the mobile switching center.

In US 2001/0018349A1, a system is proposed for providing location-based services to a plurality of mobile terminals within an area of coverage. The services offered are to be supplied in association with mobile terminal location and tracking. Mobile terminal location may be determined from a variety of location determining means or from signals supplied from the mobile terminal itself. The user in this proposal has to actively discover which services are available and the location server is constantly active for tracking mobile terminals.

This issue of mobile terminal localization can be addressed at the access points by installing short-range devices in charge of pushing a small amount of location dependent information to the mobile user, as in the "Cooltown" approach. "Cooltown" is a project by Hewlett Packard that provides architecture and various technologies to build and deploy LBS. In the "Cooltown" approach, a mobile user is made aware of its position and appropriate tuned queries can then be addressed to the server 10. Mobile devices that approach a hotspot receive location information in the form of a URL. The mobile device consequently sends a request to a server, but in this case the location information is already known. While being a scalable mechanism, this architecture implies that each access point must be configured with its location and must be able to supply this information to the mobile device. This may prove difficult to configure and may require extra functionality in the access point and/or mobile terminal. For example, a second shorter-range wireless data communications device could be needed in order for the mobile terminal to determine its own position. For further information in relation to this option, the reader is referred to "Cooltown-people, places, things: web presence for the real world", Time Kindberg et al., HP Labs, Palo Alto, CA. September 03, 2001 and to the hyperlink: "http://cooltown.hp.com/dev/wpapers/webpres/WebPresence.asp"

Other approaches exist to implement LBS. One of them is based on the new mobility protocols that are being developed by the Internet Engineering Task Force (IETF). One of these protocols is Mobile IP (MIP), which enables roaming devices to transparently connect to their home network independently of their point of attachment to the Internet. Location information can also be handled by Mobile IP extensions. MIP is a complex algorithm that is unlikely to become widespread in a short time and requires the updating of several existing types of network components, including many mobile terminals.

Other approaches to LBS are emerging that are based on complex middleware architectures for the mobile terminals. The main point in this case is the use of standardized communications protocols that work on top of the transport layer, in such a way that they can handle location information transparently to the user or to the applications. This approach may require several years to stabilize, until a common approach emerges from the huge amount of different existing technologies (CORBA, UPnP, Jini, SOAP, etc.).

It is a problem with many current arrangements which propose location based services that they require additional hardware and/or software in one or both of the mobile terminal and the access point and many also require active participation of the user in the location based service discovery and/or ordering procedures.

US 2001/044310 discloses a wireless communication system comprising a hand-held computer serving as a wireless communication device, a base station, and a server, the system supporting applications related to internet sites furnishing location-related information. Each base station in the network is associated wit ha geographical zone and responsive to queries submitted by subscriber devices in the zone. Each base station also has identification information which can be converted into location information. The communication device can retrieve the identification information of the base station. The query and location information will be delivered from the wireless communication device to a server via the base station. The server will convert the query and location information into a standard Internet format and forwards requested information from an appropriate web site.

"An efficient RPC scheme in mobile CORBA environment", by Lee Man Kei et al., in Parallel Processing 2000, 21 August 2000, pages 575-582, discloses using the client location for determining the most suitable server. The most suitable server for serving the client may be changed as client roam among cells. It discloses that the client should provide its current location, which can be presented as the IP address of current cell or base station.

It is an object of the present invention to provide improved wireless communications arrangements and in particular to provide improved wireless communications arrangements in which location based services are provided to a mobile terminal. It is also an object of the present invention to provide improved wireless communications units, methods and software products used in such arrangements.

According to the present invention there is provided, in a wireless communications arrangement, a method of providing location based services to at least one mobile terminal, said mobile terminal being adapted for roaming between a plurality of access points and for wireless communication therebetween, said access points being controlled by a network control means and the method including:
a) said control means activating location based services only on receipt of a predetermined message sent thereto from said mobile terminal through a said access point; and
b) said control means determining the location of said mobile terminal based on a network address of an access point through which said predetermined message was sent and directing said location based services to said mobile terminal through said access point.

The method may include sending said predetermined message in the form of a dedicated request, such as a HyperText Transfer Protocol (HTTP) request, and a said location based service comprising for example an Internet or intranet web page.

The method may include providing access to said control means of an address of said mobile terminal.

The method may include said control means tracing and/or retrieving a path connecting said control means to said mobile terminal, in order to identify an address of the last router before said mobile terminal.

The method may include, in the event that said access points are configured as routers, determining the substantially instantaneous location of said mobile terminal substantially directly from the network address of the currently connected access point.

The method may include, in the event that said access points are configured as bridges, determining the substantially instantaneous location of said mobile terminal through the last router to which the currently connected access point is connected.

The method may include determining a medium access control (MAC) address of said mobile terminal on the basis of an Internet protocol (IP) address of said mobile terminal.

The method may include said control means determining from said access points which of them holds in its bridging tables said medium access control (MAC) address of said mobile terminal, the substantially instantaneous location of said mobile terminal being identified from the network address of said access point.

The method may include, after determining the substantially instantaneous location of said mobile terminal, generating a said location based service such as a web page and sending said service to said mobile terminal.

The method may include determining the at least temporary location of said mobile terminal solely on the basis of the network address of an access point to which said mobile terminal is at least temporarily connected.

According to the present invention, a mobile terminal's location need not be tracked by the server. Instead, its position may be determined by the server every time the mobile terminal requests a location-dependent Web page. This saves network and computing resources on both server's and mobile terminal's sides. Therefore, the method may include said control means determining the position of a said mobile terminal substantially every time said mobile terminal requests a location based service.

The method does not rely on any specific kind of wireless technology in the hardware used for mobile terminals or access points, rather merely that the wireless technology used should be compatible with a LAN protocol such as Ethernet^{™}. Therefore, the method may include configuring said access points and the or each said mobile terminal to operate in accordance with a LAN compatible, e.g. Ethernet compatible wireless technology. Two non-limiting examples of such technology comprise the Bluetooth radio standard and/or the IEEE 802.11 radio standard.

The present invention also provides a computer readable medium having recorded thereon a software product for providing location based services to at least one mobile terminal in a wireless communications arrangement, said mobile terminal being adapted for roaming between a plurality of access points and for wireless communication therebetween, said access points being controlled by a network control means and the software product including code for:
a) said control means activating location based services only on receipt of a predetermined message sent thereto from said mobile terminal though a said access point; and
b) said control means determining the location of said mobile terminal based on a network address of an access point through which said predetermined message was sent and directing said location based services to said mobile terminal through said access point.

Said software product may be adapted for execution in said control means, said control means preferably comprising a server accessible by a said mobile terminal. The server may be a server of a wireless local area network of which the mobile terminal and access points form a part, but this is not necessarily so. The server may for example be anyway on a wide arena network such as the Internet and merely needs to be accessible to the mobile terminal.

The present invention also provides a wireless communications arrangement comprising a plurality of access points under the control of a control means and at least one mobile terminal which is adapted to roam between said access points and for wireless communication therewith, said control means being adapted to provide to said mobile terminal one or more location based services, wherein said control means is adapted to activate location based services only on receipt of a predetermined message sent thereto from said mobile terminal though a said access point, to determine the location of said mobile terminal based on a network address of an access point through which said predetermined message was sent and to direct said location based services to said mobile terminal through said access point.

The present invention also provides a wireless communications unit adapted to operate in accordance with the method of the invention and preferably configured at least temporarily as at least one of an access point and a mobile terminal of a wireless communications arrangement, such as one adapted to be compatible with a LAN (local area network) protocol such as Ethernet^{™}. Non-limiting examples of such an arrangement might comprise a wireless system adapted to operate according to the Bluetooth or IEEE 802.11 standard.

The present invention also provides a control means adapted to operate in accordance with the method of the invention and/or for executing the software product of the invention.
Fig. 1 is a block diagram of a communications arrangement according to an embodiment of the present invention;
Fig. 2 is a flow chart of a method used in the arrangement of Fig. 1;
Fig. 3 is a flow chart of a subroutine (A) of the method of Fig. 2; and
Fig. 4 is a flow chart of a subroutine (B) of the method of Fig. 1, this subroutine being an alternative subroutine to that of Fig. 3.

The present invention will now be described with reference to certain embodiments and with reference to the above mentioned drawings. Such description is by way of example only and the invention is not limited thereto.

Networks that include access points and that are able to provide wireless access to a wide area network such as the Internet or an intranet or extranet are available and an example of such a configuration can be found in some corporate networks, where the IEEE802.11 standard is being deployed and mobile terminals do not need to be equipped with special software to access an intranet or the Internet. This may be embodied in a communications system based on a wireless radio communications system such as the Bluetooth^{™} radio standard. An arrangement of this type is supported by the disclosure in US patent application 2001/0010689A1, in which interoperability is proposed between an IEEE 802.11 device and a Bluetooth transceiver.

According to the present invention, it is possible to implement location based services (LBS) in a wireless local area network (WLAN) using standard network components (routers, switches and access points). General information relation to wireless LAN's is described in the book "Wireless LAN's" by Jim Geier, Macmillan Technical Publishing, 1999. With LBS is meant the capability of a mobile terminal to present different content to the user depending on its position in the network.

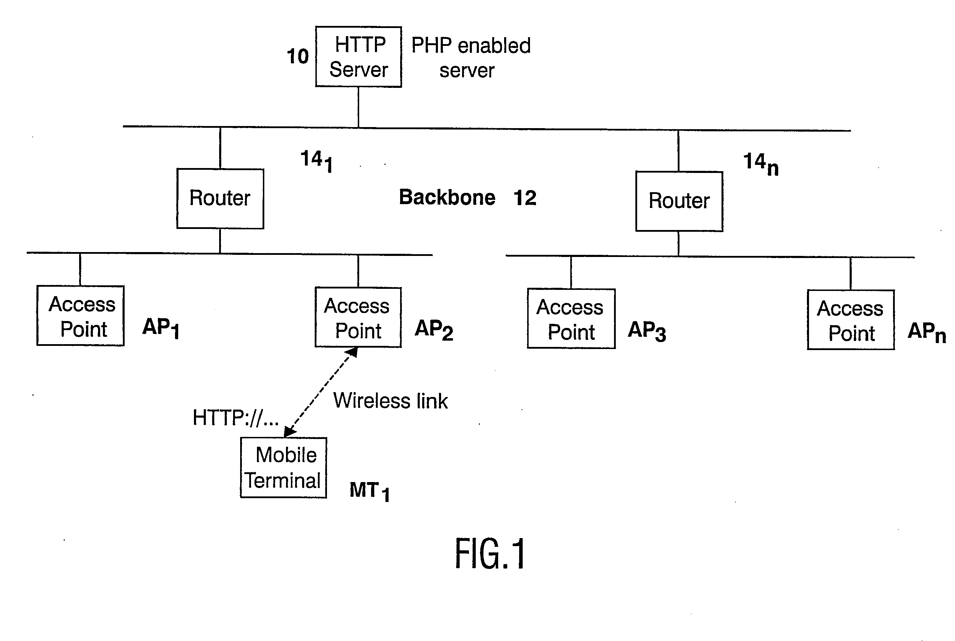

Referring for the moment in particular to Fig. 1, a wireless local area network (WLAN) includes a series of access points AP₁₋ₙ which are illustrated configured as bridges and are connected to a control means in the form of a server 10 through a network backbone 12 comprising a series of routers 14₁₋ₙ. It will, however, be appreciated that access points AP₁₋ₙ may also be embodied as routers 14₁₋ₙ. It should also be noted that, while the server is described here as a server 10 of a wireless local area network of which the mobile terminal and access points form a part, this is not essential. The server 10 may for example be anyway on a wide area network of which the Internet is only one example and merely needs to be accessible to the or each mobile terminal MT.

The access points AP₁₋ₙ are adapted for wireless communication with one or more mobile terminals MT, which may roam between access points AP₁₋ₙ in the network and may form at least temporary connections with an access point in whose area of coverage they fall at least temporarily. In the exemplary preferred embodiment, the wireless local area network WLAN comprises a wireless personal area network WPAN, having for example access points AP₁₋ₙ with a range of about 10m. The access points AP₁₋ₙ and any mobile terminals roaming in the WPAN may in addition be configured in accordance with the Bluetooth protocol.

Each mobile terminal MT₁₋ₙ is connected to a single access point AP₁₋ₙ and in Fig. 1 only one mobile terminal MT₁ is illustrated and is shown by way of example as connected to an exemplary access point AP₃. The server 10 is equipped with a server-side processing engine (not illustrated separately), which can produce dynamic Web content depending on the output of a program, an example of such a program being implemented using PHP. It is worthy to note here that PHP is a scripting language used for dynamic web pages. When a client requests a PHP based page, the server passes the page to the PHP interpreter. The PHP interpreter then executes the scripts and returns the output in the form of a dynamically generated HTTP page to the server 10.

There are two possible cases: in case A, each access point AP₁₋ₙ is an Internet protocol (IP) router, while in case B each access point AP₁₋ₙ is an Ethernet bridge. In case B, all access points AP₁₋ₙ are directly connected to the same Ethernet network and the server 10, which may or may not be connected to the same Ethernet network, is aware of the IP addresses of all access points AP₁₋ₙ.

Once a mobile terminal MT₁ reaches an access point AP₃, IP communication between mobile users MT and the server 10 is made possible. Context aware information delivery requires mobile user localization; i.e. the server 10 needs to know where the mobile terminal MT₁ is in the network in order to send location based services LBS such as person or position-specific or related web page contents. According to the present invention, the server 10 achieves this localization purely on the basis of the access points AP₁₋ₙ to which the or each mobile terminal MT₁ is connected. The actual provision of customized page contents can be achieved using, for example, server-side executable routines such as CGI and PHP. CGI (Common Gateway Interface) is a method for generating server-side dynamic Web pages, and can be considered as an alternative to PHP.

Unlike some previous approaches, e.g. "Cooltown", mobile terminal MT₁ location discovery is performed by the server 10 itself, eliminating the need of a pushing mechanism. A mobile terminal MT₁ requests information from the server 10 by sending a predetermined message and the server 10 is capable of acquiring the mobile terminal's IP address using PHP facilities. Then, the server 10 can trace the route that reaches the mobile terminal MT₁ by means of existing network tools, to which end the reader is referred by way of example to "Mobile Networking through Mobile IP", C. Perkins, e.g. at:
http://www.computer.org/internet/v2nl/perkins.htm. The last hop in the route represents the access point AP₃ the mobile terminal MT₁ is connected to. The server 10 can therefore send to the mobile terminal MT₁ a page whose contents depend on the access point AP₃ identity.

Two main cases are possible. In the first one, access points AP₁₋ₙ behave as so-called "Access Routers" and invocation of a "Traceroute" tool leads to access-point AP₁₋ₙ identification. Traceroute information can be found for example through the Internet Engineering Task Force (IETF) request for comments RFC_1393, "Traceroute Using an IP Option", Xylogics Inc. January 1993.

In the second, and a little more complicated main case, access points AP₁₋ₙ behave as "Bridges" and "Traceroute" could only point out the last IP router on the path towards the mobile terminal MT₁. The last hop can then be identified by means of other network tools that exploit the Simple Network Management Protocol (SNMP) protocol. Details of the SNMP protocol can be found through the Internet Engineering Task Force (IETF) request for comments RFC_1157, "A Simple Network Management Protocol", J. Case et al. May 1990.

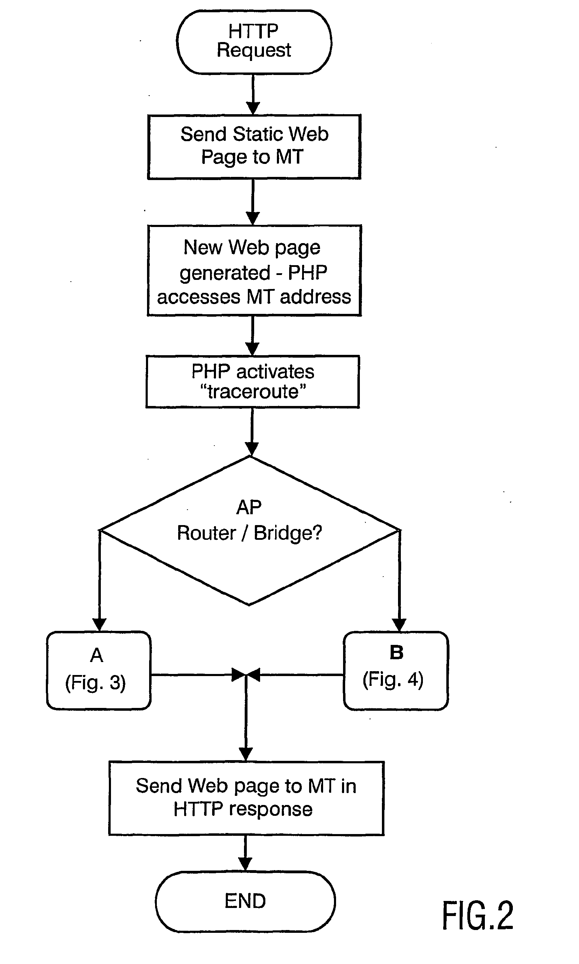

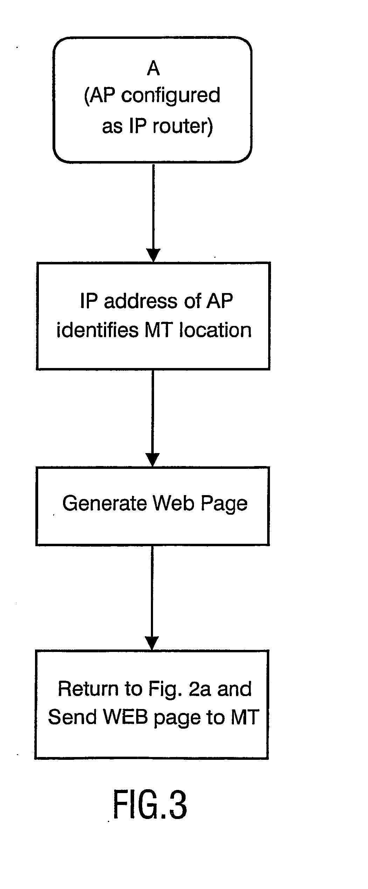

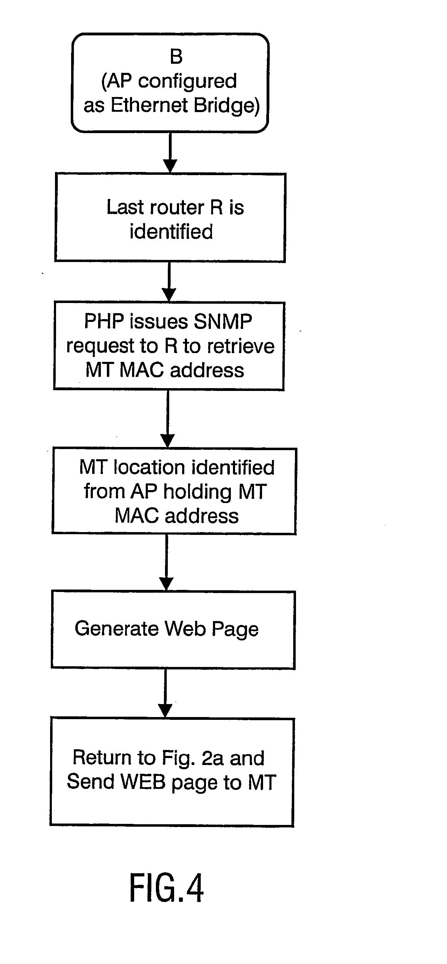

The exemplary method used in the preferred embodiment may be embodied as an executable software product adapted to be run in the server 10. The program may be summarized as outlined below and with particular reference to the flow charts of Figs. 2 to 4.
- Initially, the mobile terminal MT₁ asks for a Web page by sending a predetermined message, e.g. in the form of a hyper text transfer protocol HTTP request, to a server, asking for a PHP application to be executed. The message's route from the mobile terminal MT to the server 10 goes through its currently connected access point AP₃.
- PHP application on the server 10 can access the IP address of the mobile terminal MT₁ that generated the HTTP request.
- The PHP program invokes a "Traceroute" command to retrieve the path of the IP packet that contained the HTTP request, in order to identify the IP address of the last router 14₁ before the mobile terminal MT₁. Two cases are now possible, A and B, as represented by the subroutines shown with respect to Figs. 3 and 4 respectively.
- (A) If the access points AP₁₋ₙ are configured as IP routers, the IP address of the access point AP₃ identifies a good estimate of the mobile terminal MT₁ location substantially directly, at least to within an area of coverage of that access point AP₃.
- The corresponding location based service LBS, e.g. a web page, is generated and sent to the mobile terminal MT₁ in the HTTP response.
- The routine then ends END.
- (B) If access points AP₁₋ₙ are configured as bridges, then the "Traceroute" command does not identify the access point AP₃, but rather the last router R₁ to which the access points AP are connected.
- The PHP application on the server 10 issues a Simple Network Management Protocol (SNMP) request to the router R₁ for retrieving the Medium Access Control (MAC) address of the mobile terminal MT₁ based on its IP address, this preferably being achieved by looking at the router's ARP tables. Address Resolution Protocol (ARP) is a standard protocol that allows the retrieval of the physical MAC address from the IP address. A router 14₁₋ₙ, in order to send a packet to a mobile terminal MT, first of all retrieves its MAC address by means of ARP, then it is able to send the message. Every time a new IP address is encountered, the IP address and the correspondent MAC address are stored in the so-called "ARP table", so MAC addresses for IP addresses already in the ARP table are immediately known.
- The PHP application then issues SNMP requests to each of the access points AP connected to the router R to discover which of them has the mobile terminal MT MAC address in its bridging tables.
- The access point AP that has the mobile terminal MT MAC address identifies the mobile terminal MT location.
- The corresponding location based service LBS, e.g. a Web page, is generated and sent to the mobile terminal MT in the HTTP response.
- The routine then ends END.
According to the present invention, a mobile terminal's location need not be tracked by the server 10. Instead, its position may be determined by the server 10 every time the mobile terminal MT requests a location-dependent Web page. This saves network and computing resources on both the server's and mobile terminal's sides, as the mobile terminal's location is only required when it requests context aware information.

The present invention is applicable whenever the web server 10 is controlled by the same entity that manages access points AP₁₋ₙ.

Possible examples of non-limiting embodiments are:
- a web portal for a department in a corporate intranet, which presents location-dependent information to employees or visitors, e.g. services available in conference rooms or in offices (printers, projectors, maps for visitors etc.);
- a web server in a public area, such as a shopping mall or in an airport, that gives users location-dependent information on products or services, based on the determination of mobile terminal position from the current access point address; and
- one or more servers in a city, which offer maps and other type of information to users that connect wirelessly to public hotspots.
Other embodiments are possible as well. Many Internet service providers (ISP) are offering wireless access to the Internet to end-users and customization of their portal based on the suggested technique would be possible. This is not limited to traditional ISP, but also to others such as those who offer WLAN Internet access to their customers in for example restaurants.

The present invention therefore offers simplicity in implementation, as it allows a web server to locate a mobile terminal without the need for special features such as a positioning system, e.g. GPS or similar. Furthermore, no modification is necessary in the mobile terminal MT or in the access point AP and all that they require is the ability to use existing Internet protocol IP and to support a web browser which supports the HTTP standard protocol as specified by IETF (Internet Engineering Task Force). In the case that access points are Ethernet bridges, it is necessary that their ARP tables can be browsed by a remote server, for example by means of the standard SNMP protocol. Current industry standard protocols may be used and only the web server needs to be configured, corresponding to a centralized architecture. In the case of a high number of terminals, the server may also be easily distributed, as happens in the most common Web services. It should also be noted that the present invention is preferably embodied in a wireless personal area network WPAN, as the access points in such networks tend to have a range in the region of 10m. This short range may provide more accurate localization of the mobile terminal than using access points used in some wireless local area networks WLAN, which may have ranges of 100m. To this end, a personal area network PAN configured in accordance with the Bluetooth protocol is a good example of an arrangement in which the present invention may prove useful.

While the present invention has been particularly shown and described with respect to a preferred embodiment, it will be understood by those skilled in the art that changes in form and detail may be made without departing from the scope of the invention.

## Claims

1. A method of providing location based services to at least one mobile terminal (MT1) in a wireless communications system, said mobile terminal (MT1) being adapted for roaming between a plurality of access points and for wireless communication therebetween, said plurality of access points being controlled by a network control means (10) and the method including:
a) said network control means (10) activating location based services only on receipt of a predetermined message sent thereto from said mobile terminal (MT1) through one of said access points (AP2);
b) said network control means (10) determining the location of said mobile terminal (MT1) based on a network address of an access point (AP2) through which said predetermined message was sent and directing said location based services to said mobile terminal (MT1) through said access point (AP2), **characterized in that**:
c) said network control means (10) traces and/or retrieves a path connecting said network control means (10) to said mobile terminal (MT1) only after the receipt of the predetermined message sent thereto from said mobile terminal (MT1) through said access point (AP2), to thereby identify an address of said access point (AP2) through which said predetermined message was sent.

2. A method according to claim 1, including sending said predetermined message in the form of a dedicated request.

3. A method according to claim 2, wherein the predetermined message is a HyperText Transfer Protocol (HTTP) request.

4. A method according to claim 3 wherein a said location based service comprises an Internet or intranet web page.

5. A method according to any preceding claim including providing access to said network control means of an address of said mobile terminal.

6. A method according to any preceding claim, including said network control means tracing and/or retrieving a path connecting said network control means to said mobile terminal, in order to identify an address of a last router before said mobile terminal.

7. A method according to claim 6 including, in the event that said access points are configured as routers, determining an instantaneous location of said mobile terminal substantially directly from the network address of the currently connected access point.

8. A method according to claim 6 including, in the event that said access points are configured as bridges, determining an instantaneous location of said mobile terminal through the last router to which the currently connected access point is connected.

9. A method according to claim 8, including determining a medium access control (MAC) address of said mobile terminal on the basis of an Internet protocol (IP) address of said mobile terminal.

10. A method according to claim 9, including said network control means determining from said access points which of them holds in its bridging tables said medium access control (MAC) address of said mobile terminal, the substantially instantaneous location of said mobile terminal being identified from the network address of said access point.

11. A method according to any one of claims 7 to 10 including, after determining an instantaneous location of said mobile terminal, generating a said location based service such as a web page and sending said service to said mobile terminal.

12. A method according to any preceding claim, including determining the at least temporary location of said mobile terminal solely on the basis of the network address of said access point to which said mobile terminal is at least temporarily connected.

13. A method according to any preceding claim, including said network control means determining the position of a said mobile terminal every time said mobile terminal requests a location based service.

14. A method according to any preceding claim, including configuring said access points and the or each said mobile terminal to operate in accordance with a local area network compatible wireless technology.

15. A computer readable medium having recorded thereon a software product for providing location based services to at least one mobile terminal (MT1) in a wireless communications system, said mobile terminal (MT1) being adapted for roaming between a plurality of access points and for wireless communication therebetween, said plurality of access points being controlled by a network control means (10) and the software product, when executed by said network control means (10), providing said network control means (10) with code for:
a) activating location based services only on receipt of a predetermined message sent thereto from said mobile terminal (MT1) though one of said access points (AP2);
b) determining the location of said mobile terminal (MT1) based on a network address of an access point (AP2) through which said predetermined message was sent and directing said location based services to said mobile terminal (MT1) through said access point (AP2);
**characterized in that** the software product, when executed by said network control means (10), further provides said network control means (10) with code for
c) tracing and/or retrieving a path connecting said network control means (10) to said mobile terminal (MT1) only after the receipt of the predetermined message sent thereto from said mobile terminal (MT1) through said access point (AP2), to thereby identify an address of said access point (AP2) through which said predetermined message was sent.

16. A computer readable medium according to claim 15, wherein said software product is adapted for execution in said network control means, said network control means preferably comprising a server accessible by a said mobile terminal.

17. A wireless communications system comprising a plurality of access points under the control of a network control means (10) and at least one mobile terminal (MT1) which is adapted to roam between said access points and for wireless communication therewith, said network control means (10) being adapted to provide to said mobile terminal (MT1) one or more location based services, wherein said network control means (10) is adapted to activate location based services only on receipt of a predetermined message sent thereto from said mobile terminal (MT1) though one of said access points (AP2), to determine the location of said mobile terminal (MT1) based on a network address of an access point (AP2) through which said predetermined message was sent and to direct said location based services to said mobile terminal (MT1) through said access point (AP2), **characterized in that**:
said network control means (10) is adapted to trace and/or retrieve a path connecting said network control means (10) to said mobile terminal (MT1) only after the receipt of the predetermined message sent thereto from said mobile terminal (MT1) through said access point (AP2), to thereby identify an address of said access point (AP2) through which said predetermined message was sent.

18. A wireless communications unit comprising means for performing the method steps according to the method of any one of claims 1 to 14.

19. The wireless communications unit according to claim 18, configured at least temporarily as at least one of an access point and a mobile terminal of a wireless communications system.

20. Network control means comprising means for performing the steps of a method according to any one of claims 1 to 14.

## Patentansprüche

1. Verfahren zum Bereitstellen von standortbezogenen Diensten für mindestens ein mobiles Endgerät (MT1) in einem drahtlosen Kommunikationssystem, wobei das genannte mobile Endgerät (MT1) so ausgelegt ist, dass es zwischen einer Vielzahl von Zugangspunkten und zur drahtlosen Kommunikation dazwischen wandern kann, wobei die genannte Vielzahl von Zugangspunkten von Netzwerksteuerungsmitteln (10) gesteuert wird und das Verfahren umfasst,
a) dass die genannten Netzwerksteuerungsmittel (10) standortbezogene Dienste erst bei Empfang einer vorher festgelegten Meldung aktivieren, die ihnen von dem genannten mobilen Endgerät (MT1) über einen der genannten Zugangspunkte (AP2) gesendet wurde, und
b) dass die genannten Netzwerksteuerungsmittel (10) den Standort des genannten mobilen Endgerätes (MT1) basierend auf einer Netzwerkadresse eines Zugangspunktes (AP2) ermitteln, über den die genannte vorher festgelegte Meldung gesendet wurde, und dass die genannten standortbezogenen Dienste über den genannten Zugangspunkt (AP2) zu dem genannten mobilen Endgerät (MT1) geleitet werden,
**dadurch gekennzeichnet, dass**
c) die genannten Netzwerksteuerungsmittel (10) einen Pfad verfolgen und/oder abrufen, der die genannten Netzwerksteuerungsmittel (10) mit dem genannten mobilen Endgerät (MT1) verbindet, und zwar erst nach dem Empfang der von dem genannten mobilen Endgerät (MT1) über den genannten Zugangspunkt (AP2) gesendeten, vorher festgelegten Meldung, um **dadurch** eine Adresse des genannten Zugangspunktes (AP2) zu identifzieren, über den die genannte vorher festgelegte Meldung gesendet wurde.

2. Verfahren nach Anspruch 1, das das Senden der genannten vorher festgelegten Meldung in Form einer speziellen Anfrage einschließt.

3. Verfahren nach Anspruch 2, wobei die vorher festgelegte Meldung eine HTTP- (HyperText Transfer Protocol) Anfrage ist.

4. Verfahren nach Anspruch 3, wobei ein genannter standortbezogener Dienst eine Internet- oder Intranetwebseite umfasst.

5. Verfahren nach einem der vorhergehenden Ansprüche, das das Schaffen des Zugangs zu einer Adresse des genannten mobilen Endgerätes für die genannten Netzwerksteuerungsmittel umfasst.

6. Verfahren nach einem der vorhergehenden Ansprüche, das einschließt, dass die genannten Netzwerksteuerungsmittel einen Pfad verfolgen und/oder abrufen, der die genannten Netzwerksteuerungsmittel mit dem genannten mobilen Endgerät verbindet, um eine Adresse eines letzten Routers vor dem genannten mobilen Endgerät zu identifizieren.

7. Verfahren nach Anspruch 6, das im Fall, dass die genannten Zugangspunkte als Router konfiguriert sind, das Ermitteln eines momentanen Standorts des genannten mobilen Endgerätes im Wesentlichen direkt anhand der Netzwerkadresse des aktuell verbundenen Zugangspunktes umfasst.

8. Verfahren nach Anspruch 6, das im Fall, dass die genannten Zugangspunkte als Brücken konfiguriert sind, das Ermitteln eines momentanen Standorts des genannten mobilen Endgerätes über den letzten Router umfasst, mit dem der aktuell verbundene Zugangspunkt verbunden ist.

9. Verfahren nach Anspruch 8, das das Ermitteln einer MAC- (Medium Access Control) Adresse des genannten mobilen Endgerätes auf der Grundlage einer IP- (Internet Protocol) Adresse des genannten mobilen Endgerätes umfasst.

10. Verfahren nach Anspruch 9, das umfasst, dass die genannten Netzwerksteuerungsmittel anhand der genannten Zugangspunkte ermitteln, welcher von ihnen in seinen Brückentabellen die genannte MAC- (Medium Access Control) Adresse des genannten mobilen Endgerätes hält, wobei der im Wesentlichen momentane Standort des genannten mobilen Endgerätes anhand der Netzwerkadresse des genannten Zugangspunktes identifiziert wird.

11. Verfahren nach einem der Ansprüche 7 bis 10, das nach dem Ermitteln eines momentanen Standortes des genannten mobilen Endgerätes das Erzeugen eines genannten standortbezogenen Dienstes, beispielsweise einer Webseite, und das Senden des genannten Dienstes an das genannte mobile Endgerät umfasst.

12. Verfahren nach einem der vorhergehenden Ansprüche, das das Ermitteln des zumindest temporären Standortes des genannten mobilen Endgerätes ausschließlich auf der Grundlage der Netzwerkadresse des genannten Zugangspunktes umfasst, mit dem das genannte mobile Endgerät zumindest temporär verbunden ist.

13. Verfahren nach einem der vorhergehenden Ansprüche, das umfasst, dass die genannten Netzwerksteuerungsmittel die Position eines genannten mobilen Endgerätes jedes Mal ermitteln, wenn das genannte mobile Endgerät einen standortbezogenen Dienst anfordert.

14. Verfahren nach einem der vorhergehenden Ansprüche, das das Konfigurieren der genannten Zugangspunkte und des oder jedes genannten mobilen Endgerätes umfasst, so dass sie gemäß einer drahtlosen Technologie funktionieren, die mit einem lokalen Netzwerk kompatibel ist.

15. Computerlesbares Medium mit darauf aufgezeichnetem Softwareprodukt zum Bereitstellen von standortbezogenen Diensten für mindestens ein mobiles Endgerät (MT1) in einem drahtlosen Kommunikationssystem, wobei das genannte mobile Endgerät (MT1) so ausgelegt ist, dass es zwischen einer Vielzahl von Zugangspunkten und zur drahtlosen Kommunikation dazwischen wandern kann, wobei die genannte Vielzahl von Zugangspunkten von Netzwerksteuerungsmitteln (10) gesteuert wird und das Softwareprodukt, wenn es von den genannten Netzwerksteuerungsmitteln (10) ausgeführt wird, für die genannten Netzwerksteuerungsmittel (10) Code bereitstellt, um
(a) standortbezogene Dienste erst bei Empfang einer vorher festgelegten Meldung zu aktivieren, die ihnen von dem genannten mobilen Endgerät (MT1) über einen der genannten Zugangspunkte (AP2) gesendet wird,
(b) den Standort des genannten mobilen Endgerätes (MT1) auf der Grundlage einer Netzwerkadresse eines Zugangspunktes (AP2), über den die genannte vorher festgelegte Meldung gesendet wurde, zu ermitteln und die genannten standortbezogenen Dienste über den genannten Zugangspunkt (AP2) zu dem genannten mobilen Endgerät (MT1) zu leiten,
**dadurch gekennzeichnet, dass** das Softwareprodukt, wenn es von den genannten Netzwerksteuerungsmitteln (10) ausgeführt wird, ferner für die genannten Netzwerksteuerungsmittel (10) Code bereitstellt, um
c) einen Pfad zu verfolgen und/oder abzurufen, der die genannten Netzwerksteuerungsmittel (10) mit dem genannten mobilen Endgerät (MT1) verbindet, und zwar erst nach dem Empfang der von dem genannten mobilen Endgerät (MT1) über den genannten Zugangspunkt (AP2) gesendeten, vorher festgelegten Meldung, um **dadurch** eine Adresse des genannten Zugangspunktes (AP2) zu identifizieren, über den die genannte vorher festgelegte Meldung gesendet wurde.

16. Computerlesbares Medium nach Anspruch 15, wobei das genannte Softwareprodukt für die Ausführung in den genannten Netzwerksteuerungsmitteln ausgelegt ist, wobei die genannten Netzwerksteuerungsmittel vorzugsweise einen Server umfassen, auf den von einem genannten mobilen Endgerät zugegriffen werden kann.

17. Drahtloses Kommunikationssystem mit einer Vielzahl von von Netzwerksteuerungsmitteln (10) gesteuerten Zugangspunkten und mindestens einem mobilen Endgerät (MT1), das so ausgelegt ist, das es zwischen den genannten Zugangspunkten und zur drahtlosen Kommunikation mit ihnen wandern kann, wobei die genannten Netzwerksteuerungsmittel (10) so ausgelegt sind, dass sie dem genannten mobilen Endgerät (MT1) einen oder mehrere standortbezogene Dienste zur Verfügung stellen, wobei die genannten Netzwerksteuerungsmittel (10) so ausgelegt sind, dass sie standortbezogene Dienste nur bei Empfang einer vorher festgelegten Meldung aktivieren, die ihnen von dem genannten mobilen Endgerät (MT1) über einen der genannten Zugangspunkte (AP2) gesendet wird, um den Standort des genannten mobilen Endgerätes (MT1) auf der Grundlage einer Netzwerkadresse eines Zugangspunktes (AP2) zu ermitteln, über den die genannte vorher festgelegte Meldung gesendet wurde, und um die genannten standortbezogenen Dienste über den genannten Zugangspunkt (AP2) zu dem genannten mobilen Endgerät (MT1) zu leiten,
**dadurch gekennzeichnet, dass**
die genannten Netzwerksteuerungsmittel (10) so ausgelegt sind, dass sie einen Pfad verfolgen und/oder abrufen, der die genannten Netzwerksteuerungsmittel (10) mit dem genannten mobilen Endgerät (MT1) verbindet, und zwar erst nach dem Empfang der von dem genannten mobilen Endgerät (MT1) über den genannten Zugangspunkt (AP2) gesendeten, vorher festgelegten Meldung, um **dadurch** eine Adresse des genannten Zugangspunktes (AP2) zu identifizieren, über den die genannte vorher festgelegte Meldung gesendet wurde.

18. Drahtloses Kommunikationsgerät mit Mitteln zum Durchführen der Verfahrensschritte gemäß dem Verfahren nach einem der Ansprüche 1 bis 14.

19. Drahtloses Kommunikationsgerät nach Anspruch 18, das zumindest temporär mindestens entweder als ein Zugangspunkt oder als ein mobiles Endgerät eines drahtlosen Kommunikationssystems konfiguriert ist.

20. Netzwerksteuerungsmitteln mit Mitteln zum Durchführen der Schritte eines Verfahrens nach einem der Ansprüche 1 bis 14.

## Revendications

1. Procédé de fourniture de services basés sur la localisation à au moins un terminal mobile (MT₁) dans un système de communications sans fil, ledit terminal mobile (MT₁) étant adapté pour être itinérant entre une pluralité de points d'accès et pour une communication sans fil entre eux, ladite pluralité de points d'accès étant commandée par des moyens de commande de réseau (10) et le procédé incluant :
a) l'activation, par lesdits moyens de commande de réseau (10), de services basés sur la localisation seulement à la réception d'un message prédéterminé qui leur a été envoyé à partir du terminal mobile (MT₁) à travers un desdits points d'accès (AP₂);
b) la détermination, par lesdits moyens de commande de réseau (10), de l'emplacement dudit terminal mobile (MT₁) sur la base d'une adresse de réseau d'un point d'accès (AP₂) à travers lequel le message prédéterminé a été envoyé et la livraison des services basés sur la localisation vers ledit terminal mobile (MT₁) par ledit point d'accès (AP₂), **caractérisé en ce que** :
c) lesdits moyens de commande de réseau (10) ne tracent et/ou ne récupère un chemin connectant lesdits moyens de commande de réseau (10) vers ledit terminal mobile (MT₁) qu'après réception du message prédéterminé qui leur a été envoyé à partir dudit terminal mobile (MT₁) à travers ledit point d'accès (AP₂), pour identifier ainsi une adresse dudit point d'accès (AP₂) à travers lequel le message prédéterminé a été envoyé.

2. Procédé selon la revendication 1, incluant l'envoi dudit message prédéterminé sous la forme d'une requête spécialisée.

3. Procédé selon la revendication 2, dans lequel le message prédéterminé est une requête HTTP (Protocole de Transfert Hyper Texte).

4. Procédé selon la revendication 3, dans lequel un desdits services basés sur la localisation comprend une page Web Internet ou intranet.

5. Procédé selon l'une quelconque des revendications précédentes, incluant la fourniture d'un accès auxdits moyens de commande de réseau d'une adresse dudit terminal mobile.

6. Procédé selon l'une quelconque des revendications précédentes, incluant le traçage et/ou la récupération, par lesdits moyens de commande de réseau, d'un chemin connectant lesdits moyens de commande de réseau audit terminal mobile, afin d'identifier une adresse du dernier routeur avant ledit terminal mobile.

7. Procédé selon la revendication 6 incluant, dans le cas où lesdits points d'accès sont configurés comme des routeurs, la détermination de l'emplacement instantané dudit terminal mobile pratiquement directement à partir de l'adresse de réseau du point d'accès actuellement connecté.

8. Procédé selon la revendication 6 incluant, dans le cas où lesdits points d'accès sont configurés comme des ponts, la détermination de l'emplacement instantané dudit terminal mobile à travers le dernier routeur auquel le point d'accès actuellement connecté est connecté.

9. Procédé selon la revendication 8, incluant la détermination d'une adresse de contrôle d'accès au support (MAC) dudit terminal mobile sur la base d'une adresse de protocole Internet (IP) dudit terminal mobile.

10. Procédé selon la revendication 9, incluant la détermination, par lesdits moyens de commande de réseau, de celui qui, parmi lesdits points d'accès, possède dans ses tables de pontage lesdites adresses de contrôle d'accès au support (MAC) dudit terminal mobile, l'emplacement pratiquement instantané dudit terminal mobile étant identifié d'après l'adresse de réseau dudit point d'accès.

11. Procédé selon l'une quelconque des revendications 7 à 10 incluant, après la détermination de l'emplacement instantané dudit terminal mobile, la génération d'un desdits services basés sur la localisation comme une page Web et l'envoi dudit service audit terminal mobile.

12. Procédé selon l'une quelconque des revendications précédentes, incluant la détermination de l'emplacement au moins temporaire dudit terminal mobile seulement sur la base de l'adresse de réseau dudit point d'accès auquel ledit terminal mobile est au moins temporairement connecté.

13. Procédé selon l'une quelconque des revendications précédentes, incluant la détermination, par lesdits moyens de commande de réseau, de la position dudit terminal mobile chaque fois que ledit terminal mobile demande un service basé sur la localisation.

14. Procédé selon l'une quelconque des revendications précédentes, incluant la configuration desdits points d'accès et dudit terminal mobile ou de chacun desdits terminaux mobiles pour fonctionner selon une technologie sans fil compatible avec un réseau local.

15. Support lisible par ordinateur sur lequel est enregistré un produit logiciel pour fournir des services basés sur la localisation à au moins un terminal mobile (MT₁) dans un système de communications sans fil, ledit terminal mobile (MT₁) étant adapté pour être itinérant entre une pluralité de points d'accès et pour des communications sans fil entre eux, ladite pluralité de points d'accès étant commandée par des moyens de commande de réseau (10) et le produit logiciel, lorsqu'il est exécuté par lesdits moyens de commande de réseau (10), fournissant auxdits moyens de commande de réseau (10) du code pour :
a) n'activer des services basés sur la localisation qu'à la réception d'un message prédéterminé qui leur a été envoyé à partir dudit terminal mobile (MT₁) à travers un desdits points d'accès (AP₂) ;
b) déterminer l'emplacement dudit terminal mobile (MT₁) sur la base d'une adresse de réseau d'un point d'accès (AP₂) à travers lequel ledit message prédéterminé a été envoyé et diriger lesdits services basés sur la localisation vers ledit terminal mobile (MT₁) à travers ledit point d'accès (AP₂) ; **caractérisé en ce que** le produit logiciel, lorsqu'il est exécuté par lesdits moyens de commande de réseau (10), fournit en plus auxdits moyens de commande de réseau (10) du code pour :
c) ne tracer et/ou récupérer un chemin connectant lesdits moyens de commande de réseau (10) audit terminal mobile (MT₁) qu'après réception du message prédéterminé qui leur a été envoyé à partir du terminal mobile (MT₁) à travers le point d'accès (AP₂), pour identifier ainsi une adresse dudit point d'accès (AP₂) à travers lequel ledit message prédéterminé a été envoyé.

16. Support lisible par ordinateur selon la revendication 15, dans lequel ledit produit logiciel est adapté pour s'exécuter dans lesdits moyens de commande de réseau, lesdits moyens de commande de réseau comprenant de préférence un serveur accessible par un dit terminal mobile.

17. Système de communications sans fil comprenant une pluralité de points d'accès sous le contrôle de moyens de commande de réseau (10) et au moins un terminal mobile (MT₁) qui est adapté pour être itinérant entre lesdits points d'accès et pour une communication sans fil avec eux, lesdits moyens de commande de réseau (10) étant adaptés pour fournir audit terminal mobile (MT₁) un ou plusieurs services basés sur la localisation, dans lesquels lesdits moyens de commande de réseau (10) sont adaptés pour n'activer des services basés sur la localisation qu'à la réception d'un message prédéterminé qui leur a été envoyé par ledit terminal mobile (MT₁) à travers un desdits points d'accès (AP₂), pour déterminer l'emplacement dudit terminal mobile (MT₁) sur la base d'une adresse de réseau d'un point d'accès (AP₂) à travers lequel ledit message prédéterminé a été envoyé et pour diriger lesdits services basés sur la localisation vers ledit terminal mobile (MT₁) à travers ledit point d'accès (AP₂), **caractérisé en ce que** :
lesdits moyens de commande de réseau (10) sont adaptés pour ne tracer et/ou récupérer un chemin connectant lesdits moyens de commande de réseau (10) audit terminal mobile (MT₁) qu'après la réception du message prédéterminé qui leur a été envoyé à partir dudit terminal mobile (MT₁) à travers ledit point d'accès (AP₂), pour identifier ainsi une adresse dudit point d'accès (AP₂) à travers lequel ledit message prédéterminé a été envoyé.

18. Unité de communications sans fil comprenant des moyens pour exécuter les étapes du procédé selon l'une quelconque des revendications 1 à 14.

19. Unité de communications sans fil selon la revendication 18, configurée au moins temporairement comme au moins l'un parmi un point d'accès et un terminal mobile d'un système de communications sans fil.

20. Moyens de commande de réseau comprenant des moyens pour exécuter les étapes d'un procédé selon l'une quelconque des revendications 1 à 14.
